# EUROPÄISCHE PATENTANMELDUNG

(11) **EP 1 491 414 A1**
(43) Veröffentlichungstag der Anmeldung: **29.12.2004**
(21) Anmeldenummer: 04014342.2
(22) Anmeldetag: 18.06.2004
(51) Int. Cl.: B60R 22/32

(54) **Autogurt-Schneidesystem**

(30) Priorität: 23.06.2003 DE 20309727 U
(71) Anmelder: Stepput, Zoran, 28757 Bremen (DE)
(72) Erfinder: Stepput, Zoran, 28757 Bremen (DE)

(57) **Zusammenfassung**

Das Autogurtschneidesystem (10) ist ein leicht zu bedienendes Gerät, welches die Aufgabe hat bei Bedarf (Unfall etc...) einen Gurt (2) schnell und unkompliziert zu durchtrennen. Falls er durch einem Unfall oder auch einem Defekt direkt am Gurtschloß etc..... auf dem herkömmlichem Wege nicht mehr zu lösen sein sollte. Und da das System (10) für jedem sichtbar am Gurt (2) befestigt ist, kann man ihn dort jederzeit finden und auch auslösen. Außerdem ist das System (10) am Gurt (2) auch für außenstehende Personen sofort sichtbar und kann somit auch von diesen Personen bei Bedarf ausgelöst werden! Das Autogurtschneidesystem (10) kann am Gurt (2) problemlos in der Höhe verschoben werden um dem Benutzer jederzeit die Möglichkeit zu geben, das System (10) für ihn in die angemessene Höhe zu schieben. Das bedeutet auch das dadurch immer der richtige "Sitz" am Gurt (2) gewährleistet ist, um im Notfall schnell eingreifen zu können!!

## Beschreibung

### Was ist neu und Schätzenswert am Autogurtschneidesystem?

Das neue an meinem Autogurt-Schneidesystem ist die einfache Technik am Gerät!Das neue Autogurt Schneidesystem ist ein nicht wegzudenkendes neues Rettungs u.Sicherheitsgerät, dessen Aufgabe darin besteht in Notfällen in PKW's etc.... schnellstmöglichst den Haltegurt zu durchtrennen , damit Verletzte oder gefährdete Personen so schnell wie möglich aus dem Fahrzeug geborgen werden können!!Und das schnell , einfach und unkompliziert!!
Besonders bei den Situationen , wenn durch einen Unfall der eigentliche Gurtlöser /öffner durch Gegenstände verbeult oder versperrt ist!
Ein anderes Beispiel wäre , dass die im Fahrzeug sitzende Person durch eine Fraktur (Bruch) nicht mehr dazu in der Lage ist den Gurtlöser selber auszulösen , dann könnten außerhalb stehende Personen hier sofort eingreifen , da das System für jedermann sichtbar am Gurt oder direkt vor der Brust hängt und spielend einfach zu bedienen ist!Das wäre natürlich eine von vielen Situationen , die durch Unfälle etc..pasieren könnten!
Ein gutes Beispiel wäre auch , das die Person (im Auto) Ohnmächtig ist und das Fahrzeug schlägt Flammen , wieder könnte man von außen schnell helfen!

Und das neue an diesem Gerät ist auch die Schiebetechnik des Schneidehebels sowie die Platzierung des Schneidsystems den man Variabel in die Gewünschte Position Schieben kann ohne das irgendeine Beeinträchtigung am Gerät entsteht!Und das bedeutet auch , das Schneidesystem für jedermann verwendbar ist und keine Größeneinschränkung besteht!!!

Das Schneide-System besitzt eine Schutzklappe , die verhindert das der Gurt unbeabsichtigt durchtrennt wird.

Kurz und Bündig das neue Autogurt Schneidesystem ist der Ideale Partner für Mensch und PKW!!!!!

### Bezugszeichenliste (für das Autogurt - Schneidesystem)

- 1: Schubhebel
- 2: Gurt
- 3: Schneidsicherung
- 4: Schneidschlitten
- 5: Führungsschlitz
- 6: Fixierungsstempel
- 7: Fixierungsleisten
- 8: Führungskanal
- 9: Schneideklinge
- 10: Autogurt - Schneidesystem
- 11: Schutzklappe
- 12: Ring/Lasche
- 13: Rundungen

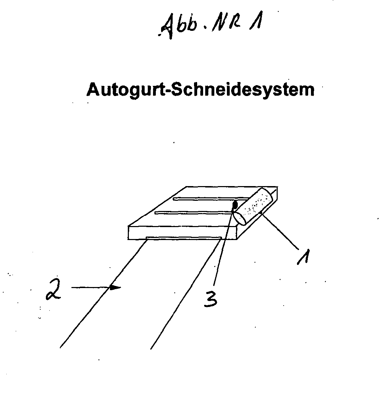

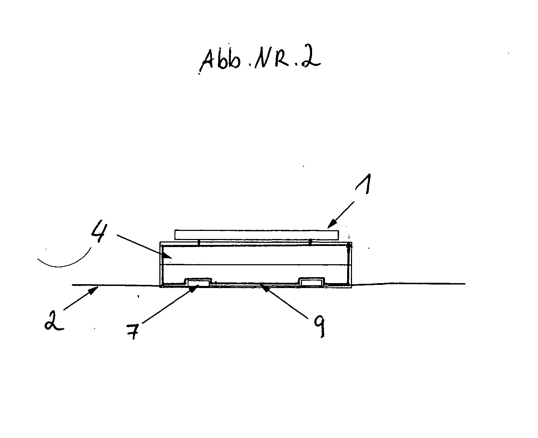

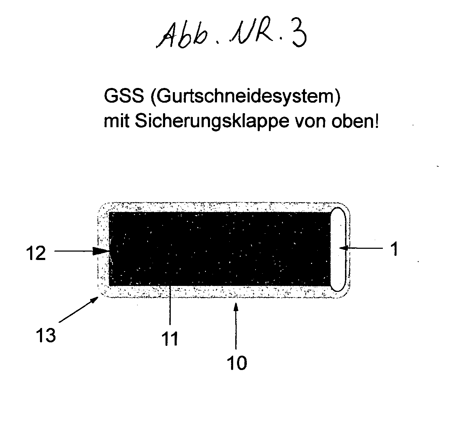

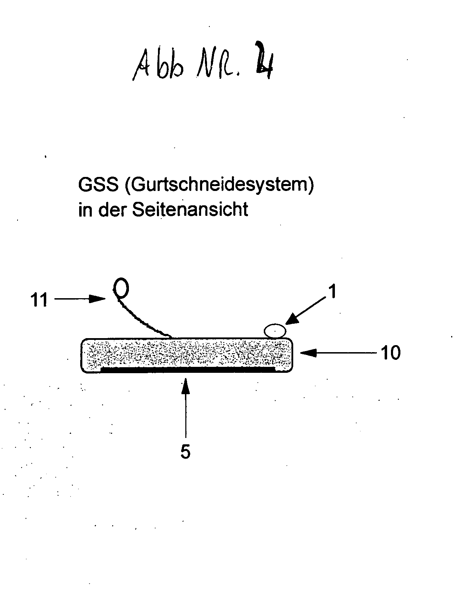

## Patentansprüche

1. Das Autogurt - Schneidesystem ist **dadurch gekennzeichnet, dass** man es direkt an den Gurt anbringt um so im Notfall oder bei Bedarf sofort das System nutzen kann. Nur meine Autogurt - Schneidesysteme dürfen direkt an die Gurte befestigt werden.

2. Das Autogurt - Schneidesystem nach Anspruch 1 **dadurch gekennzeichnet, dass** durch die Höhenverstellung nach oben und unten ist gewährleistet, das daß Autogurt - Schneidesystem immer an die optimale Stellung geschoben werden kann um eine schnelle unkomplizierte Trennung des Gurtes (2) zu ermöglichen!

3. Das Autogurt - Schneidesystem nach Anspruch 1 **dadurch gekennzeichnet, dass** ein am Gerät (10) befindlicher Schubhebel (1) , durch eine Schiebebewegung die Trennung des Gurtes (2) vornimmt.

4. Das Autogurt - Schneidesystem nach Anspruch 1 ist **dadurch gekennzeichnet**, das die komplette Form des Gehäuses sowie aller Teile am System nur von mir bestimmt werden dürfen.

5. Das Autogurt - Schneidesystem nach Anspruch 1 besitzt eine Schutzklappe (11) oder Sicherung die gewährleistet, das der Gurt nicht unbeabsichtigt durchtrennt wird. Diese Schutzklappe (11) oder Sicherung kann bei Gebrauch entfernt werden mit Hilfe eines Ringes oder einer Lasche.
